# EUROPÄISCHE PATENTANMELDUNG

(11) **EP 4 516 170 A1**
(43) Veröffentlichungstag der Anmeldung: **05.03.2025**
(21) Anmeldenummer: 24193997.4
(22) Anmeldetag: 11.08.2024
(51) Int. Cl.: A47J 31/52, A47J 31/60

(54) **VERFAHREN UND VORRICHTUNG ZUR GENAUEREN ANZEIGE EINER PROGRAMMDAUER**

(30) Priorität: 30.08.2023 DE 102023208318
(71) Anmelder: BSH Hausgeräte GmbH, 81739 München (DE)
(72) Erfinder: Reichel, Thomas, 83278 Traunstein (DE); Rautter, Felix, 83339 Chieming (DE)

(57) **Zusammenfassung**

Ein Verfahren zum Betreiben einer Heißgetränkemaschine mit den Schritten: a) Anzeigen einer Auswahl an Serviceprogrammen samt einer Dauer der jeweiligen Serviceprogramme (I), b) Erfassen einer benutzerseitigen Wahl eines Serviceprogramms (II), c) Starten des gewählten Serviceprogramms (III), d) Auffordern zur Vornahme einer benutzerseitigen Tätigkeit (IV), e) Erfassen der benutzerseitigen Tätigkeit (V), f) Abschließen des Serviceprogramms (VI), wird weitergebildet durch einen Schritt i) (VII) nach dem Schritt d), in dem eine Zeitspanne für die Vornahme der benutzerseitigen Tätigkeit erfasst und bei der Anzeige der Dauer eines Serviceprogramms in einem Schritt a) eines folgenden Serviceverfahrens berücksichtigt wird.

Die Erfindung betrifft des Weiteren ein Computerprogrammprodukt zur Ausführung des Verfahrens sowie ein zur Ausführung des Verfahrens eingerichtete Heißgetränkemaschine.

## Beschreibung

Die Erfindung betrifft ein Verfahren zum Betreiben einer Heißgetränkemaschine, insbesondere für den Hausgebrauch, mit den folgenden Schritten:
a) Anzeigen einer Auswahl an Serviceprogrammen samt einer Dauer der jeweiligen Serviceprogramme,
b) Erfassen einer benutzerseitigen Wahl eines Serviceprogramms,
c) Starten des gewählten Serviceprogramms,
d) Auffordern zur Vornahme einer benutzerseitigen Tätigkeit,
e) Erfassen der benutzerseitigen Tätigkeit, und
f) Abschließen des Serviceprogramms.

Die Erfindung betrifft außerdem eine Heißgetränkemaschine zur Durchführung des Verfahrens mit einer Aktivierungseinheit, einer Eingabeeinheit, einer Speichereinheit, einer Steuereinheit und einer Vorrichtung zur Erfassung einer benutzerseitigen Servicetätigkeit sowie Computerprogrammprodukt zur Ausführung des Verfahrens.

DE 10 2018 214 677 B4 beschreibt ein Verfahren für eine Heißgetränkezubereitungsmaschine, wobei neben der Grundentkalkung eine Schnellentkalkung wählbar ist, wenn das Gerät aufgrund fälliger Entkalkung für weitere Getränkezubereitungen gesperrt ist.

Der Erfindung liegt die Aufgabe zugrunde, ein verbessertes Verfahren für die Voraussage der benötigten Zeiten für Serviceprogramme anzugeben.

Die Aufgabe wird bei dem oben genannten Verfahren erfindungsgemäß dadurch gelöst, dass nach dem Schritt d) ein Schritt i) erfolgt, in welchem eine Zeitspanne für die Vornahme der benutzerseitigen Tätigkeit erfasst und bei der Anzeige der Dauer eines Serviceprogramms in einem Schritt a) eines folgenden Verfahrens berücksichtigt wird.

Die Heißgetränkemaschine, im Folgenden vereinfacht auch "das Gerät", ist eine Zubereitungsmaschine für Kaffee oder Tee, zum Beispiel eine Padmaschine, eine Espressomaschine oder ein Kaffeevollautomat, und kann von einem einzigen Benutzer oder von mehreren Benutzern bedient werden.

Serviceprogramme einer Heißgetränkemaschine dienen regelmäßig ihrer Reinigung und der Entkalkung, ggf. auch nur eines Teils ihrer Zubereitungseinrichtungen wie beispielsweise einer Milchschaumeinrichtung. Viele Serviceprogramme lassen sich nur teilweise automatisieren, so dass während eines Serviceprogramms eine oder einzelne Servicetätigkeiten nutzerseitig manuell durchgeführt werden müssen, zum Beispiel das Entleeren einer Restwasserschale.

Viele Heißgetränkemaschinen zeigen jeweils eine prognostizierte Dauer für die einzelnen Serviceprogramme an einem Display oder in einer Geräte-App an, wobei zunächst ein Standardwert für die jeweilige Dauer in der Gerätesoftware hinterlegt ist. Die angezeigte Dauer soll dem Benutzer ein Gefühl dafür vermitteln, wie lange ein gewähltes Serviceprogramm von Anfang bis Ende, einschließlich aller manuellen Schritte, dauern wird. Wenngleich sich die automatischen Schritte durch Zeitmessung vorab recht genau bestimmen und angeben lassen, gibt es bei den manuellen Schritten naturgemäß eine hohe Varianz. Die dafür benötigte Zeit hängt nicht nur von der Schnelligkeit und Geschicklichkeit des Benutzers ab, sondern auch von räumlichen Aspekten wie zum Beispiel der Entfernung der Heißgetränkemaschine zur Wasserver- und/oder -entsorgung. Jede geräteseitig prognostizierte Dauer ist daher wenig kundenspezifisch und trifft für einen Benutzer nur dann tatsächlich zu, wenn er alle manuellen Schritte eines Serviceprogramms in einer geräteseitig dafür angenommenen Standardzeitspanne durchführt.

Übereinstimmend mit dem Stand der Technik wird einem Benutzer in Schritt a) des erfinderischen Verfahrens eine Auswahl an Serviceprogrammen samt ihrer jeweiligen Dauer angezeigt. Die Anzeige kann zum Beispiel eine symbolische Abbildung, die Bezeichnung der Serviceleistung und zusätzlich eine Zeitangabe, wie lange das Serviceprogramm dauern wird, umfassen. Den Wert für die Angabe der Dauer bezieht die Heißgetränkemaschine aus einem internen Speicher. Der Wert ist werkseitig vorgegeben.

Daraufhin trifft der Benutzer eine Wahl aus den ihm angezeigten Programmen, welche das Gerät in Schritt b) erfasst, woraufhin das Gerät das gewählte Serviceprogramm in Schritt c) startet.

In einem Schritt d) wird der Benutzer zur Vornahme einer manuellen Servicetätigkeit aufgefordert. Das Programm kann zum Beispiel zum Auffüllen des Wassertanks und zum Einwurf einer Reinigungstablette auffordern oder zu einem späteren Zeitpunkt einen automatischen Programmabschnitt anhalten und zum Entleeren von Spülflüssigkeit beispielsweise aus einer Restwasserschale auffordern, um danach mit dem automatischen Programm fortzufahren.

Mit Schritt e) des erfinderischen Verfahrens wird das benutzerseitige Durchführen der manuellen Tätigkeit geräteseitig erfasst. Bekanntlich kann das Gerät zum Beispiel mithilfe von Sensoren, Detektoren oder sonstigen Messfühlern feststellen, dass die Tätigkeit ausgeführt wurde, beispielsweise, dass der Wassertank entnommen wurde und dass er wieder eingesetzt wurde.

Wurden alle Prozessschritte des Serviceprogrammverfahrens, sowohl geräteseitig als auch manuell, ausgeführt, schließt das Programm in Schritt f).

Erfindungsgemäß wird nun in einem Schritt i) zumindest während des Schritts e) die Zeitspanne für die Vornahme der benutzerseitigen Tätigkeit erfasst. Der Schritt i) kann nach der Aufforderung zur Vornahme einer benutzerseitigen Tätigkeit in Schritt d) erfolgen und somit maximal die Zeitspanne von der Aufforderung bis zur Beendigung der benutzerseitigen Tätigkeit erfassen. Kann das Gerät sowohl den Beginn der Vornahme der benutzerseitigen Tätigkeit als auch deren Abschluss sensieren, wie im obigen Beispiel das Betätigen (Entnahme und Wiedereinsetzen) des Wassertanks, beginnt das Erfassen der Zeitspanne erst mit dem tatsächlichen Beginn der benutzerseitigen Tätigkeit und ist damit genauer.

Die in Schritt i) erfasste Zeitspanne wird erfindungsgemäß bei der Anzeige der Dauer eines Serviceprogramms im Schritt a) eines folgenden Serviceprogramms berücksichtigt. Dazu wird eine neue Dauer für das Serviceprogramm berechnet, indem die werkseitig für die manuelle Tätigkeit angenommene Zeitspanne durch die erfasste Zeitspanne ersetzt wird. Die neue Dauer wird im geräteinternen Speicher abgespeichert und bei einer erneuten Anzeige jedenfalls desselben Serviceprogramms abgerufen und angezeigt. Damit lässt sich die Dauer des Serviceprogramms bzw. der Serviceprogramme an die tatsächlichen nutzerseitigen Gegebenheiten anpassen, so dass sie realistischer sind und eine höhere Akzeptanz des Benutzers erfahren und seine Zufriedenheit erhöhen. Die höhere Akzeptanz und Nutzerzufriedenheit führt zu einer geringeren Hemmschwelle, Serviceprogramme durchzuführen. Daraus resultiert eine häufigere und regelmäßigere Pflege und damit eine höhere Lebensdauer des Geräts.

Grundsätzlich kann das erfinderische Verfahren jedenfalls genau einmal durchgeführt werden, um die werkseitig angenommene Zeitspanne eines Serviceprogramms für das Durchführen der manuellen Servicetätigkeit durch eine realistischere Zeitspanne zu ersetzen, zum Beispiel nur bei der erstmaligen Wahl jedes Serviceprogramms. Alternativ kann der Schritt i) nach einer vorteilhaften Ausgestaltung der Erfindung bei jeder Wahl und Durchführung eines Serviceprogramms ablaufen. Denn der Benutzer kann bei der Ausführung der manuellen Servicetätigkeiten eine gewisse Routine erlangen oder organisatorische Optimierungen vornehmen, beispielsweise den Standplatz des Geräts relativ zur Wasserver- und/oder -entsorgung ändern. Die wiederholte Durchführung des Schritts i) hat den Vorteil, dass sich die angezeigte Dauer für ein Serviceprogramm mit jeder nutzerseitigen Veränderung derjenigen Zeit, die der Benutzer tatsächlich benötigt, immer genauer anpasst bzw. annähert.

Gemäß einer vorteilhaften Ausgestaltung der Erfindung können die Schritte d), e) und i) innerhalb eines Servicevorgangs einmal oder mehrmals hintereinander und/oder mit zeitlichem Abstand während des Verlaufs des Serviceprogramms wiederholt werden. Nach dem Starten des Serviceprogramms kann mehrmals, entweder direkt hintereinander oder zu unterschiedlichen Zeitpunkten während des Ablaufs, eine Aufforderung zur Vornahme einer benutzerseitigen Tätigkeit erfolgen. Zum Beispiel kann ein Benutzer nach dem Starten des Programms die Aufforderung erhalten, eine Reinigungstablette an einer Stelle im Gerät zu platzieren. Unmittelbar danach kann die Aufforderung erfolgen, den Wassertank mit Frischwasser zu befüllen, wonach das Gerät automatisch mit seinem Programm startet. Im weiteren Verlauf des Programms kann das Gerät das Verfahren unterbrechen und eine weitere Aufforderung an den Benutzer ausgeben, beispielsweise die Tropfschale zu leeren und wieder einzusetzen.

Gemäß dem erfinderischen Verfahren werden die Zeitspannen sämtlicher benutzerseitiger Servicetätigkeiten des Serviceprogramms separat erfasst und verarbeitet, was zu noch höherer Genauigkeit in der Anzeige der Dauer des Serviceprogramms in Schritt a) eines folgenden, identischen Serviceprogramms führt.

Nach einer weiteren vorteilhaften Ausgestaltung kann das Verfahren einen Schritt j) umfassen, in welchem ein spezifischer Benutzer erkannt wird und die Erfassung der Zeitspanne in Schritt i) und deren Berücksichtigung bei der Anzeige der Dauer des Serviceprogramms im Schritt a) eines folgenden Serviceprogramms ebenfalls nutzerspezifisch erfolgt. Somit werden die eine oder alle benutzerseitigen Tätigkeit(en) nicht nur hinsichtlich ihrer Zeitspanne erfasst, sondern mithilfe einer Recheneinheit auch einem spezifischen Benutzer zugeordnet. Auch dieser Schritt führt zu einer genaueren Anpassung der Anzeige der Dauer eines Serviceprogramms, nämlich individualisiert für einen bestimmten Benutzer. Betätigen nämlich mehrere Benutzer das Gerät, erfolgt die Angabe der Dauer eines Serviceprogramms jeweils entsprechend dem betätigenden Benutzer, womit eine besonders hohe Genauigkeit der Angabe der Dauer erreicht wird.

Nach einer weiteren vorteilhaften Ausgestaltung kann das Erkennen eines spezifischen Benutzers durch eine nutzerseitige Eingabe oder eine automatische Erfassung erfolgen. Die Eingabe kann der Benutzer manuell vornehmen, zum Beispiel durch Eingabe einer Zeichenfolge oder durch eine akustische Eingabe. Ein Benutzer kann mithilfe einer entsprechenden Vorrichtung auch über seinen Fingerabdruck, per Gesichtserkennung oder Ähnliches erkannt werden.

Die Zeitspannen für die Vornahme der nutzerseitigen Servicetätigkeiten können von Mal zu Mal schwanken, sei es, weil der Benutzer über eine stark unterschiedliche Leistungsfähigkeit verfügt oder weil unterschiedliche Benutzer tätig werden, deren Zeitspannen sich stark unterscheiden und die nicht individuell erfasst werden. Nach einer weiteren vorteilhaften Ausgestaltung kann das Verfahren daher einen Schritt k) umfassen, in welchem ein Mittelwert aus den erfassten Zeitspannen für identische durchgeführte Servicetätigkeiten berechnet, gespeichert und im Schritt a) eines folgenden, identischen Serviceprogramms berücksichtigt wird. Wurde also mehr als ein Durchgang eines identischen Serviceprogramms durchgeführt und wurde das erfinderische Verfahren bei jeder Wahl und Durchführung eines Serviceprogramms angewandt, so kann anstelle der zuletzt erfassten Zeitspanne ein Mittelwert aus allen bereits erfassten Zeitspannen für eine folgende Anzeige der Dauer berücksichtigt werden. Dies bezieht demnach nicht nur die benötigte Zeit des unmittelbar vorhergehenden Verfahrens ein, die ungewöhnlich lang oder kurz gewesen sein kann, sondern mildert auch Schwankungen und "Ausreißer" und macht die Anpassung einer prognostizierten Zeit an eine tatsächlich benötigte Zeit noch genauer.

Solange ein Serviceprogramm noch nicht durchgeführt wurde, gibt das Gerät die dafür werkseitig festgelegte Dauer an. Bisher wurde das erfindungsgemäße Verfahren überwiegend dahingehend beschrieben, dass die Dauer eines Serviceprogramms anhand erfasster Daten aus vorangegangenen identischen Serviceprogrammen angepasst wurde. Nach einer weiteren vorteilhaften Ausgestaltung der Erfindung kann das Verfahren einen Schritt I) umfassen, in welchem eine Zeitspanne erfasst oder ein Mittelwert aus erfassten Zeitspannen berechnet und im Schritt a) nicht nur desselben Serviceprogramms, sondern eines beliebigen folgenden Serviceprogramms berücksichtigt wird. Das erfindungsgemäße Verfahren schließt dazu aus der erfassten Zeitspanne einer ersten manuellen Servicetätigkeit innerhalb eines ersten Serviceprogramms auf eine noch nicht erfasste Zeitspanne einer manuellen zweiten Servicetätigkeit innerhalb eines zweiten, anderen Serviceprogramms. Weicht also die erfasste Zeitspanne der ersten Tätigkeit - oder ggf. ihr Mittelwert - in beliebiger Richtung beispielsweise um 10% von der werkseitig dafür angenommenen Zeitspanne des zweiten Serviceprogramms ab, so berücksichtigt das erfindungsgemäße Verfahren die Abweichung in der oben erläuterten Weise bereits bei der Anzeige der Dauer des zweiten Serviceprogramms, obwohl es nutzerseitig noch gar nicht durchgeführt wurde, obwohl also kein nutzerspezifischer Wert für die Zeitspanne innerhalb des zweiten Serviceprogramms erfasst wurde und bei der Anzeige der Dauer des zweiten Serviceprogramms berücksichtigt werden konnte.

Alternativ kann das erfindungsgemäße Verfahren einen Mittelwert bilden aus erfassten Zeitspannen einer manuellen Servicetätigkeit innerhalb eines ersten Serviceprogramms und aus erfassten Zeitspannen einer manuellen Servicetätigkeit innerhalb eines zweiten, anderen Serviceprogramms. Werden somit alle erfassten Zeitspannen für manuelle Schritte in allen, auch unterschiedlichen, Serviceprogrammen gemittelt und die Werte bei jedem weiteren, auch einem dritten aufgerufenen Serviceprogramm berücksichtigt, kann die genauere, an den Benutzer angepasste Anzeige der Dauer eines Serviceprogramms rascher erfolgen.

Auch dies hat den oben erwähnten Vorteil der genaueren nutzerbezogenen Anpassung der Anzeige der Dauer, trägt darüber hinaus aber auch der Tatsache Rechnung, dass ein Benutzer oder eine Gruppe von Benutzern, welche bei einem Serviceprogramm beispielsweise mehr Zeit für alle manuellen Schritte benötigen, höchstwahrscheinlich auch mehr Zeit für die manuellen Schritte anderer Serviceprogramme brauchen werden, z. B. ältere Benutzer. Umgekehrt können schnellere oder geschicktere Benutzer realistischere Angaben für ihre Durchführung von Serviceprogrammen erhalten.

Die der Erfindung zugrundeliegende Aufgabe wird bei der eingangs genannten Heißgetränkemaschine erfindungsgemäß durch eine Vorrichtung zum Erfassen einer Zeitspanne der benutzerseitigen Tätigkeit gelöst. Damit ist die Heißgetränkemaschine in der Lage, die Angabe der prognostizierten Dauer eines Serviceprogramms an einen tatsächlichen nutzerspezifischen Zeitbedarf anzupassen. Die Heißgetränkemaschine ist folglich insbesondere zur Durchführung des oben genannten Verfahrens geeignet und erzielt die dort genannten Vorteile.

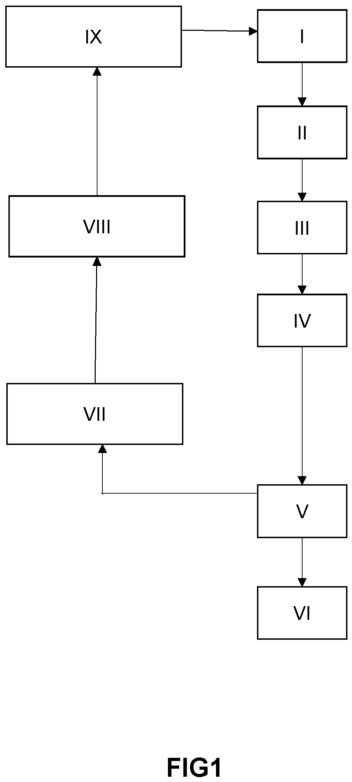

Das Prinzip der Erfindung wird im Folgenden anhand einer Zeichnung beispielshalber noch näher erläutert. In der Zeichnung zeigt die einzige Figur 1 exemplarisch ein Ablaufdiagramm des erfindungsgemäßen Verfahrens am Beispiel eines Kaffeevollautomaten. Das Verfahren betrifft die Durchführung von Serviceprogrammen am Kaffeevollautomaten, die teilautomatisch ablaufen. Sie erfordern während der Durchführung eine Servicetätigkeit des Benutzers des Geräts, bevor das Serviceprogramm, beispielsweise eine Reinigung, eine Entkalkung, ein gemeinsames Programm dafür oder das Reinigen einer Milchschaumeinheit, abgeschlossen werden kann.

Das Verfahren beginnt in Schritt I mit der Anzeige einer Auswahl an Serviceprogrammen, welche beispielsweise nach dem Einschalten im Menü unter Pflege und Wartung' in einem Display des Kaffeevollautomaten erscheint. Die gezeigte Auswahl gibt neben den Serviceprogrammen auch eine Dauer dafür an, wieviel Zeit das jeweilige Serviceprogramm zu seiner Durchführung voraussichtlich braucht. Der Wert der Dauer ist werkseitig im Gerät hinterlegt und beruht auf einer Annahme, die der Hersteller aufgrund praktischer Versuche gebildet hat. Der Benutzer wählt nun aus der Anzeige ein Serviceprogramm aus und macht seine Eingabe zum Beispiel über eine berührempfindliche Oberfläche am Gerät.

In Schritt II erfasst das Gerät die Wahl des Benutzers und startet das Serviceprogramm mit Schritt III.

Während des Ablaufs des Serviceprogramms stoppt das Programm und es ergeht in Schritt IV über das Display eine Aufforderung an den Benutzer, beispielsweise den Wassertank mit Frischwasser zu befüllen. Der Benutzer kommt dieser Aufforderung nach, entnimmt den Tank, leert ihn zum Beispiel am Spülbecken seiner Küche aus und befüllt ihn über den Wasserhahn mit frischem Wasser. Anschließend trägt er den Wassertank zurück und installiert ihn wieder am Gerät. Die benutzerseitige Tätigkeit an sich wird in Schritt V über geräteseitig eingebaute Sensoren erfasst, und zwar sowohl die Entnahme des Wassertanks als auch das Wiedereinsetzen. Dies geschieht regelmäßig zumindest schon aus Sicherheitsgründen, damit das Gerät seine Tätigkeit nicht ohne eingesetzten Wassertank fortsetzt, sondern den Benutzer zum Einsetzen des zum Beispiel nicht oder nicht korrekt eingesetzten Wassertanks auffordern kann. Bereits das Erfassen des korrekt wieder eingesetzten Wassertanks und/oder eine separate Bestätigung des Benutzers über die vorgenommene Servicetätigkeit kann ein Signal für das Gerät sein, sein unterbrochenes Serviceprogramm fortzusetzen.

Erfindungsgemäß wird nicht nur die Tatsache der Vornahme der Servicetätigkeit des Schritts V an sich detektiert: In einem Schritt VII wird nun auch die Zeitspanne der durchgeführten benutzerseitigen Tätigkeit erfasst. Die Sensoren zeichnen also die Zeitspanne auf, die beispielsweise von der Entnahme des Wassertanks bis zu seinem Wiedereinsetzen verstreicht, und verarbeiten sie, indem sie für die Anzeige der Dauer desselben Serviceprogramms in einem folgenden Schritt a) berücksichtigt wird. Dazu ersetzt der Wert der aufgezeichneten Zeitspanne den werkseitig angenommenen Wert für die Zeitspanne der benutzerseitigen Servicetätigkeit, woraufhin eine neue Dauer für das Serviceprogramm berechnet wird. Ruft der Benutzer das Serviceprogramm zu einem späteren Zeitpunkt erneut auf, so wird ihm eine aktualisierte Dauer für das Programm angezeigt, die genauer derjenigen Zeit entspricht, die er für das Programm voraussichtlich benötigen wird. Die höhere Genauigkeit der Angabe der Dauer verleiht ihr und der Durchführung des Serviceprogramms bzw. auch der übrigen Serviceprogramme mehr Akzeptanz, was in ihrer regelmäßigeren Durchführung resultieren und damit zu einer gründlicheren Gerätepflege durch den Benutzer führen kann. Außerdem trägt sie zu mehr Zufriedenheit des Benutzers mit dem Gerät bei, was ebenfalls zu einem pfleglicheren Umgang und einer längeren Lebensdauer des Geräts beiträgt.

Nach Beendigung der benutzerseitigen Tätigkeit fährt das Serviceprogramm automatisch fort und endet nach Abschluss aller Programmschritte mit Schritt VI.

Da es sich bei der vorhergehenden, detailliert beschriebenen Ausführungsform des Verfahrens um ein Beispiel handelt, kann es in üblicher Weise vom Fachmann in einem weiten Umfang modifiziert werden, ohne den Bereich der Erfindung zu verlassen. So kann die Erfassung der Zeitspanne schon mit der Ausgabe einer Aufforderung zur Vornahme einer Servicetätigkeit oder mit einer Benutzerbestätigung beginnen und bis zu einer Benutzerbestätigung für die erfolgreiche Vornahme reichen, wenn es keine geeigneten Sensoren zur Erfassung der Servicetätigkeit an sich gibt. Außerdem können die Zeitspannen benutzerspezifisch erfasst werden, woraufhin die Dauern für Serviceprogramme individuell für mehrere Benutzer desselben Geräts individuell ausgegeben werden können. Darüber hinaus können aus den erfassten Zeitspannen Mittelwerte gebildet und verrechnet werden, um Schwankungen in der Leistungsfähigkeit des oder der Benutzer auszugleichen. Weiterhin schließt die Verwendung der unbestimmten Artikel "ein" bzw. "eine" nicht aus, dass die betreffenden Merkmale auch mehrmals oder mehrfach vorhanden sein können.

### Bezugszeichenliste

- I: Anzeige Auswahl und Dauer
- II: Erfassen einer benutzerseitigen Wahl
- III: Start
- IV: Auffordern zur Vornahme einer benutzerseitigen Tätigkeit
- V: Erfassen des Abschlusses der benutzerseitigen Tätigkeit
- VI: Ende
- VII: Erfassen der Zeitspanne der benutzerseitigen Tätigkeit
- VIII: Berechnen einer neuen Dauer für das Serviceprogramm
- IX: Speichern der neuen Dauer für das Serviceprogramm

## Patentansprüche

1. Verfahren zum Betreiben einer Heißgetränkemaschine, insbesondere für den Hausgebrauch, mit den folgenden Schritten:
a) Anzeigen einer Auswahl an Serviceprogrammen samt einer Dauer der jeweiligen Serviceprogramme (I),
b) Erfassen einer benutzerseitigen Wahl eines Serviceprogramms (II),
c) Starten des gewählten Serviceprogramms (III),
d) Auffordern zur Vornahme einer benutzerseitigen Tätigkeit (IV),
e) Erfassen der benutzerseitigen Tätigkeit (V),
f) Abschließen des Serviceprogramms (VII),
**gekennzeichnet durch** einen Schritt i) nach dem Schritt d), in dem eine Zeitspanne für die Vornahme der benutzerseitigen Tätigkeit erfasst und bei der Anzeige der Dauer eines Serviceprogramms in einem Schritt a) (I) eines folgenden Serviceverfahrens berücksichtigt wird (VII, VIII, IX).

2. Verfahren nach Anspruch 1, **dadurch gekennzeichnet, dass** der Schritt i) (VII, VIII, IX) nach jeder Wahl eines Serviceprogramms ausgeführt wird.

3. Verfahren nach einem der vorhergehenden Ansprüche, **dadurch gekennzeichnet, dass** die Schritte d) (IV), e) (V) und i) (VII) innerhalb eines Servicevorgangs einmal oder mehrmals während des Verlaufs des Serviceprogramms wiederholt werden.

4. Verfahren nach einem der vorhergehenden Ansprüche, **dadurch gekennzeichnet, dass** das Verfahren einen Schritt j) umfasst, in welchem ein spezifischer Benutzer erkannt wird und die Erfassung der Zeitspanne in Schritt i) und deren Berücksichtigung bei der Anzeige der Dauer des Serviceprogramms im Schritt a) (I) eines folgenden Serviceverfahrens nutzerspezifisch erfolgt.

5. Verfahren nach dem vorhergehenden Anspruch, **dadurch gekennzeichnet, dass** das Erkennen eines spezifischen Benutzers durch Erfassen einer benutzerseitigen Eingabe oder durch eine geräteseitige automatische Erfassung erfolgt.

6. Verfahren nach einem der vorhergehenden Ansprüche, **dadurch gekennzeichnet, dass** das Verfahren einen Schritt k) umfasst, in welchem ein Mittelwert aus erfassten Zeitspannen für identische durchgeführte Prozessschritte berechnet, gespeichert und im Schritt a) (I) eines folgenden Serviceverfahrens berücksichtigt wird.

7. Verfahren nach einem der vorhergehenden Ansprüche, **dadurch gekennzeichnet, dass** das Verfahren einen Schritt I) umfasst, in welchem ein Mittelwert aus erfassten Zeitspannen für unterschiedliche durchgeführte Prozessschritte berechnet, gespeichert und in einem Schritt a) (I) eines beliebigen folgenden Serviceverfahrens berücksichtigt wird.

8. Heißgetränkemaschine, insbesondere für den Hausgebrauch, mit einer Aktivierungseinheit, einer Eingabeeinheit, einer Speichereinheit, einer Steuereinheit und einer Vorrichtung zur Erfassung einer benutzerseitigen Servicetätigkeit, **gekennzeichnet durch** eine Vorrichtung zur Erfassung der Zeitspanne der benutzerseitigen Tätigkeit, insbesondere zur Durchführung eines Verfahrens nach einem der obigen Ansprüche.

9. Computerprogrammprodukt, umfassend Befehle, welche bei Ausführung des Computerprogrammprodukts durch eine Heißgetränkemaschine, insbesondere nach Anspruch 8, diese veranlassen, das Verfahren nach einem der Ansprüche 1 bis 7 auszuführen.
